# EUROPEAN PATENT APPLICATION

(11) **EP 4 239 497 A1**
(43) Date of publication of application: **06.09.2023**
(21) Application number: 21909216.0
(22) Date of filing: 14.12.2021
(51) Int. Cl.: G06F 16/54

(54) **IMAGE DISPLAY METHOD AND APPARATUS, AND ELECTRONIC DEVICE**

(30) Priority: 21.12.2020 CN 202011521995
(71) Applicant: Vivo Mobile Communication Co., Ltd., Dongguan, Guangdong 523863 (CN)
(72) Inventor: HAN, Guimin, Dongguan, Guangdong 523863 (CN)
(74) Representative: Murgitroyd & Company
(86) International application number: PCT/CN2021/137662
(87) International publication number: WO 2022/135219

(57) **Abstract**

This application discloses an image display method, an apparatus, and an electronic device. The image display method includes: displaying a first collage and receiving a first input to a first single image; and displaying a first image associated with the first single image in response to the first input. The first single image is one of images that compose the first collage, and the first image is a second collage or a second single image.

## Description

### CROSS-REFERENCE TO RELATED APPLICATION

This application claims priority to Chinese Patent Application No. 202011521995.8, filed on December 21, 2020 and entitled "IMAGE DISPLAY METHOD, APPARATUS, AND ELECTRONIC DEVICE", which is incorporated herein by reference in its entirety.

### TECHNICAL FIELD

This application relates to the field of communications technologies, and in particular, to an image display method, an apparatus, and an electronic device.

### BACKGROUND

With the improvement of the ability of mobile terminals to take pictures, more and more image functions supported by applications are emerging. Using an existing image viewing function, whether an image is viewed in a local photo album or by using online manners such as Moment, and electronic photo album applets, the image viewing method is usually to click and enlarge the image to view details of the image. Such control method for displaying the image is simple.

### SUMMARY

Embodiments of this application are intended to provide an image display method, an apparatus, and an electronic device, which can resolve a problem that a control method in related technologies is simple when an image is displayed.

To resolve the foregoing technical problem, this application is implemented as follows.

According to a first aspect, an embodiment of this application provides an image display method. The method includes: displaying a first collage and receiving a first input to the first single image; and displaying a first image associated with the first single image in response to the first input. The first single image is one of images that compose the first collage, and the first image is a second collage or a second single image.

According to a second aspect, an embodiment of this application provides an image display apparatus. The apparatus includes: a first display module, configured to display a first collage and receive a first input to a first single image; and a second display module, configured to display a first image associated with the first single image in response to the first input. The first single image is one of images that compose the first collage, and the first image is a second collage or a second single image.

According to a third aspect, an embodiment of this application provides an electronic device. The electronic device includes a processor, a memory, and a program or an instruction stored in the memory and executable on the processor. When the program or the instruction is executed by the processor, the steps of the method according to the first aspect are implemented.

According to a fourth aspect, an embodiment of this application provides a readable storage medium. The readable storage medium stores a program or an instruction, and when the program or the instruction is executed by a processor, the steps of the method according to the first aspect are implemented.

According to a fifth aspect, an embodiment of this application provides a chip. The chip includes a processor and a communication interface. The communication interface is coupled to the processor, and the processor is configured to run a program or an instruction to implement the method according to the first aspect.

In the embodiments of this application, after the first collage is displayed, if the first input to the first single image in the first collage is received, the first image pre-associated with the first single image is displayed. By using this interactive method for display, the images associated with the single images that compose the first collage, in addition to the image already displayed in the first collage, can be displayed, so as to implement a new interactive method for image display. This resolves a problem that the interactive method for image display in related technologies is simple, which can display more hidden images by using various interactive methods, thereby providing an entrance to view images other than the currently displayed images.

### BRIEF DESCRIPTION OF DRAWINGS

FIG. 1 is a schematic flowchart of an image display method according to an embodiment of this application;
FIG. 2 is a first schematic interaction diagram of an optional image display method according to an embodiment of this application;
FIG. 3 is a second schematic interaction diagram of an optional image display method according to an embodiment of this application;
FIG. 4 is a third schematic interaction diagram of an optional image display method according to an embodiment of this application;
FIG. 5 is a fourth schematic interaction diagram of an optional image display method according to an embodiment of this application;
FIG. 6 is a fifth schematic interaction diagram of an optional image display method according to an embodiment of this application;
FIG. 7 is a sixth schematic interaction diagram of an optional image display method according to an embodiment of this application;
FIG. 8 is a seventh schematic interaction diagram of an optional image display method according to an embodiment of this application;
FIG. 9a is an eighth schematic interaction diagram of an optional image display method according to an embodiment of this application;
FIG. 9b is a ninth schematic interaction diagram of an optional image display method according to an embodiment of this application;
FIG. 9c is a tenth schematic interaction diagram of an optional image display method according to an embodiment of this application;
FIG. 10 is a schematic diagram depicting modules of an image display interactive apparatus according to an embodiment of this application; and
FIG. 11 is a schematic diagram depicting a hardware structure of an electronic device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some rather than all of the embodiments of this application. Based on the embodiments of this application, all other embodiments obtained by a person of ordinary skill in the art without creative efforts fall within the protection scope of this application.

Terms "first" and "second" in the specification and claims of this application are used to distinguish between similar objects, and do not need to be used to describe a specific order or sequence. It should be understood that the data used in this way is interchangeable in appropriate circumstances so that the embodiments of this application can be implemented in other orders than the order illustrated or described herein. In addition, in the specification and the claims, "and/or" represents at least one of connected objects, and a character "/" generally represents an "or" relationship between associated objects.

The image display method provided in the embodiments of this application may be applied to various application scenarios. For example, a user can view the above cover and hidden images stored locally on electronic devices, or view the above cover and hidden images on network platforms such as electronic albums, social-networking platforms, application software, or applets of the application software. This is not limited in the embodiments of this application. In any kind of software, system assemblies, or network platforms on which photos can be viewed, the image display method provided in the embodiments of this application may be applied, so as to enrich image display and interaction methods.

The image display method provided in the embodiments of this application is described in detail below through specific embodiments and application scenarios thereof with reference to the accompanying drawings.

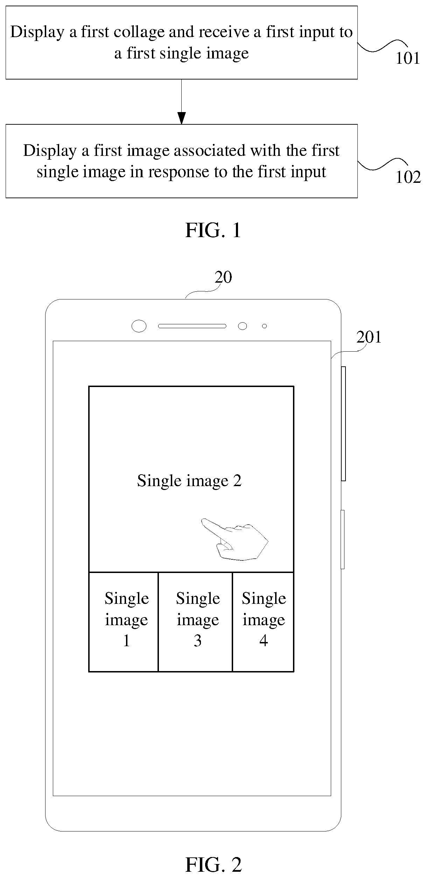

As shown in FIG. 1, the image display method provided in the embodiments of this application includes the following steps.

Step 101: Display a first collage and receive a first input to a first single image.

Step 102: Display a first image associated with the first single image in response to the first input.

The first single image is one of images that compose the first collage, and the first image is a second collage or a second single image.

In the embodiments of this application, an image may be either a single image or a collage. The collage is an image by combining at least two single images. In at least two single images that compose the first collage, there is at least one single image (the first single image) that is pre-associated with a "hidden" image (the first image). After the first input to the first single image is received, the "hidden" image that is pre-associated with the first single image can be displayed. In this way, the first single image can be regarded as an "entrance" to view the associated "hidden" image. In a case that the "entrance" receives the first input, the pre-associated "hidden" image can be displayed. By using such interactive display method, the images associated with the single images that compose the first collage, in addition to the image already displayed in the first collage, can be displayed as opposed to controlling the first single image that receives the first input to enlarge for display. This resolves a problem that the interactive method for image display in related technologies is simple.

In the single images that compose the first collage, only some single images may be pre-associated with corresponding images, or each single image may be pre-associated with a corresponding image. Using the first image associated with the first single image as an example, the first image may be the second collage or the second single image. Further, in an optional example, if the first image is the second collage, the single image in the second collage may still be further associated with a "hidden" image. For example, a third single image in the second collage may be associated with the second image, and the second image may be a third collage or a fourth single image. In this way, if the first input to the third single image is received, the second image associated with the third single image can be displayed.

After the display of the "hidden" image is triggered, both a collage on a previous level and the "hidden" image in a display region can be displayed, for example, side by side. If an area of the display region is not big enough, the display region for displaying the collage on the previous level can be reduced to provide a display space for displaying the "hidden" image. Alternatively, a partial overlap of the collage on the previous level and the "hidden" image can be displayed. Alternatively, the "hidden" image can completely cover the collage on the previous level, that is, the collage on the previous level is not displayed in the display region, and only the "hidden" image that is triggered is displayed. When the "hidden" image is displayed, the "hidden" image can be dynamically displayed by using some animation effects. For example, in the case of side-by-side display, the collage on the previous level can be dynamically and gradually shrunk, and the "hidden" image is gradually enlarged in a remaining display region. When the "hidden" image covers the collage on the previous level, the collage on the previous level gradually becomes transparent until it disappears in the display region, and the "hidden" image may gradually become visible and finally be fully displayed in the display region. It should be noted that the above is only used as examples for describing the effect of dynamic display, but not intended to limit the image display method in the embodiments of this application.

The first input means an input to the single image in the collage. The first input is used to indicate the display of the pre-associated image of the single image that receives the first input. The first input may be any pre-specified input type such as click, double click, and long press. Devices that receive an input may be a touch screen, a mouse, a keyboard, and other types of input devices. For example, in a case that the first collage is displayed by using a mobile phone equipped with a touch screen, the first input may be receiving a touch click by a user on a display region of the first single image in the first collage displayed on a display.

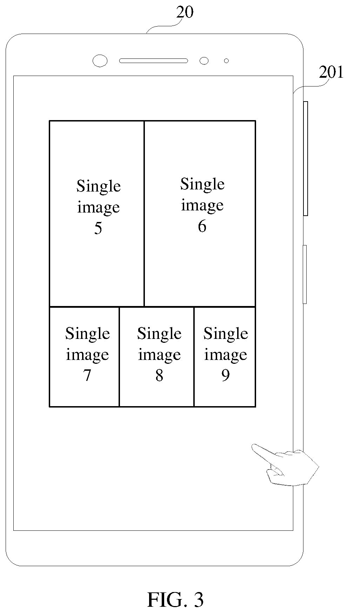

For example, FIG. 2 is an optional schematic diagram of a first collage. In this example, the first collage is displayed on a touch screen 201 of a mobile phone 20, including a plurality of single images, specifically, a single image 1 to a single image 4. In the example in FIG. 2, if a user clicks on a display region of a single image 2 (the first single image) on the touch screen 201, the mobile phone 20 receives the user's click input (the first input). Then, the mobile phone 20 can respond to the user's click, refresh the current page, cancel the display of the first collage, and display a "hidden" image on a next level that is pre-associated with the single image 2 on the display screen 201. As shown in FIG. 3, the first image associated with the single image 2, that is, a second collage, is displayed, including a single image 5 to a single image 9. Optionally, there may be only one hidden single image. In this case, the display of the first collage can be directly canceled, and the second single image associated with the single image 2 is displayed. Examples in the accompanying drawings are not provided herein again.

It should be noted that canceling the display of the first collage is an optional implementation. In some other implementations, both the first collage and the image associated with the single image 2 can be displayed on the display.

Specifically, in an optional implementation, after step 102 is performed to display the first image associated with the first single image, based on two different cases (1) and (2) in which a content of the first image may be the same as or different from that of the first single image, the method of displaying the first image can be implemented by different implementations.

Case (1): A content of the first image is the same as that of the first single image. In this case, the display of the first collage is canceled and the first image is displayed in a full screen.

That is, if the first single image is not associated with another image, after the first single image receives the first input, the first single image can be displayed in full screen to implement the effect of enlarging one single image in the first collage.

Case (2): The content of the first image is different from that of the first single image. In this case, the first collage and the first image are displayed in a split screen.

That is, if the first single image is pre-associated with another image, after the first single image receives the first input, the first collage and the first image associated with the first single image can be displayed simultaneously in the display region by using the display effect of the split screen. The split screen may be divided into upper and lower screens, left and right screens, or other split screen display method in which display regions are complementary or overlapping.

In an optional implementation, after the first image associated with the single image 2 is displayed, the user can return to the interface for displaying the first collage. An optional implementation is to receive a fifth input after the first image pre-associated with the single image 2 is displayed. The fifth input is used to indicate that the display of the first image is canceled, and the first collage is displayed again. Further, in response to the fifth input, the first collage is displayed. Optionally, the fifth input may be the input to the first image. For example, for the touch screen, the fifth input may be clicking on a specified region, double-clicking the specified region, touching the specified region and performing a slide operation in any direction, and the like.

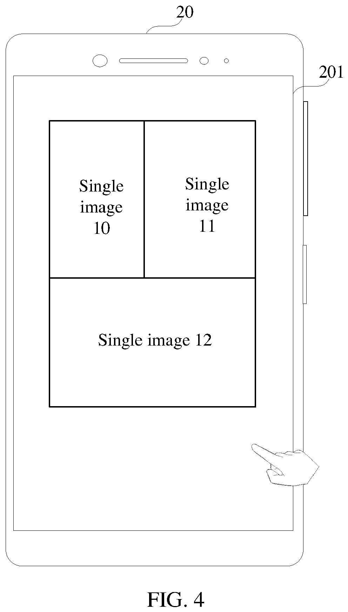

For example, in the interface shown in FIG. 3, if the user clicks on a display region (the fifth input) outside the display region of single image 5 to single image 9, as shown in FIG. 3, the interface shown in FIG. 2 is displayed, and the first collage including the single image 1 to the single image 4 is displayed. When the first collage is displayed, the user can also perform an operation corresponding to the first input on a single image other than the single image 2, or example, clicking on the single image 1. If the single image 1 is pre-associated with a third image, the third image is displayed after the operation on the single image 1 is received. As shown in FIG. 4, the third image may be a collage, specifically, including a single image 10 to a single image 12. FIG. 4 is an optional example. Another collage template may also be used to display the third image. Alternatively, the collage template that displays the third image may also be different from the collage template that displays the first image.

In another optional implementation, after the first image associated with the single image 2 is displayed, a hidden image of the first image on the next level, that is, the image associated with the first image, can be further displayed. In a case that the first image is the second collage, at least one single image in the second collage may be pre-associated with a corresponding image, and the associated image can be displayed after the single image receives the first input.

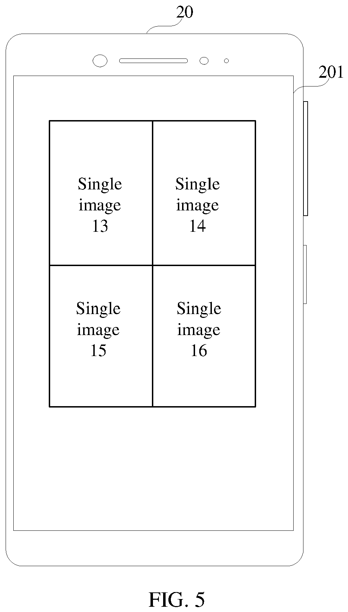

For example, in the examples provided in FIG. 2 and FIG. 3, after clicking on the first single image (the single image 2), the second collage associated with the single image 2 may be displayed, including the single image 5 to the single image 9. Further, the user can click on the single image 6 (the third single image) in the interface shown in FIG. 3, and the second image is displayed when in a case that the single image 6 is pre-associated with the second image. Specifically, the second image may be a collage, including a single image 13 to a single image 16. An optional display method is shown in FIG. 5, which cancels the display of the first collage and the first image, and displays the second image in a full screen. Another optional display method is to display the first collage, the first image, and the second image in a split screen, or by using a method of partially overlapping, or to display the first image and the second image only in a split screen or by using a method of partially overlapping, and the like.

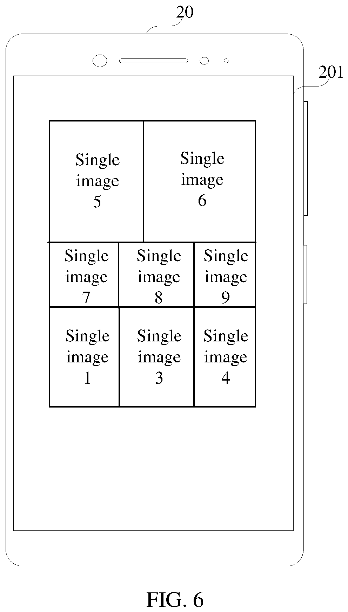

In an optional example, when the hidden image associated with the single image is displayed, the hidden image may be displayed in a region of the single image, so that the hidden image can cover the single image. For example, in an optional example, the display of the first single image in the original display region of the first single image is canceled by using the dynamic effect of flipping the first single image after the first input to the first single image in the first collage is received, and the first image is displayed in the original display region of the first single image after the flipping. In other words, after the first single image receives the first input, in a case that the first collage contains single images other than the first single image, the first single image is canceled in the display region of the first single image, and the first image associated with the first single image is displayed. In an optional example, after the single image 2 in the first collage shown in FIG. 2 receives the first input, the interface shown in FIG. 6 is displayed, and the second collage associated with the single image 2 including the single picture 5 to the single picture 9 is displayed in the original display region of the single image 2.

Before the first collage is displayed, the first collage may be generated according to a user input. In an optional implementation, before the first collage is displayed, a sixth input of selecting one or more images in an image set is received, so that the first collage is generated according to the sixth input. If a plurality of images are selected, the plurality of images are combined to generate the first collage, and each selected image is a single image in the first collage. If one image is selected, the selected image is used as the first collage and segmented by using a specified segmentation method, and each image obtained after the segmentation is a single image in the first collage.

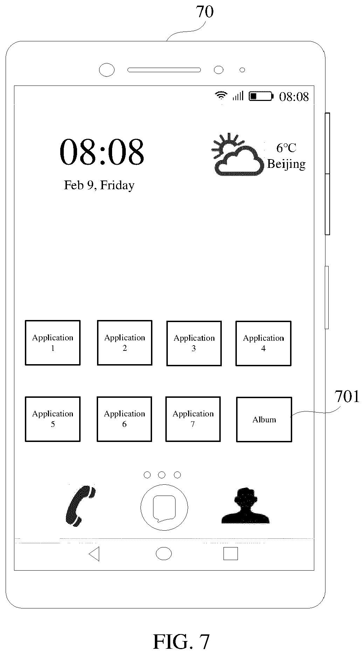

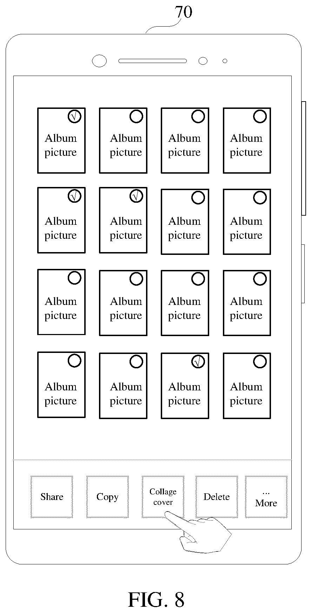

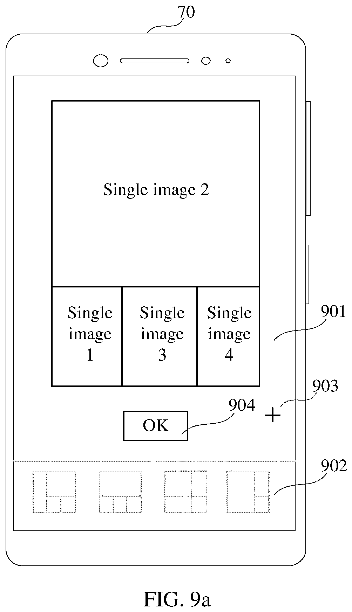

Optionally, the user's operation of generating the first collage may be performed on a system assembly of the electronic device, application software installed in the electronic device, a website page, and other platforms. For example, using an example in which the first collage is generated by the user from an album system assembly of the mobile phone. As shown in FIG. 7, the user can click on an icon 701 for the album function on the desktop of the mobile phone 70, and then enter an album function interface as shown in FIG. 8, to display one or more album pictures (images in the image set) in an album (an image set). As shown in FIG. 8, the user can select or deselect the album picture by clicking on a check box in the upper right corner of the album picture. If there is a √ in the check box, it means that the album picture is selected. If there is no V in the check box, it means that the album picture is not selected. After one or more album pictures are selected, clicking on an icon "collage cover" indicates that the first collage is generated according to the currently selected one or more album pictures, and then the interface shown in FIG. 9a is displayed.

One or more pictures in the album may be selected by the user. In a case that the user selects a plurality of album pictures, after the user clicks on the icon "collage cover", the interface as shown in FIG. 9a is displayed, the single image 1 to the single image 4 are the four album pictures selected by the user in the album. The display effect of the collage is displayed at the top of an interface 901 in a default combining method. The user can select a template in a template region 902. After the selection, the collage effect of the currently selected template can be displayed in real time at the top of the interface 901. If the user selects a "OK" icon 904, the first collage is generated according to a preview of the collage in the interface 901. Optionally, if the user needs to delete or add a single image in the first collage, the user can click on an icon 903 to enter the album as shown in FIG. 8 again, and select album pictures for generating the first collage according to the implementation as shown in FIG. 8.

In another scenario, the user selects one picture in the album. In this case, after the user clicks on the icon "collage cover", the interface as shown in FIG. 9a can be displayed. The single image 1 and the single image 4 are displayed in a way in which the user selects one album picture in the album and segments it according to a preset segmentation method. A content of the first collage obtained by combing the single image 1 to the single image 4 is the same as that of the album pictures selected by the user. Contents of the single image 1 to the single image 4 are contents in corresponding regions of the selected album pictures. Correspondingly, segmentation templates are displayed in the template region 902. After a template is selected, the user can preview the effect after the selected album picture is segmented according to the currently selected template at the top of the interface 901. The method of generating and editing the first collage, reference may be made to the above implementations of generating the first collage by selecting a plurality of album pictures by the user.

After the first collage is generated, an associated image of any single image in the first collage may continue to be generated, and the generation process is similar to that of the first collage. After the first collage is generated and displayed, and before the first input to the first single image is received, the method further includes the process of establishing an association relationship between the first image and the first single image, which may specifically include the following steps: receiving a second input to the first single image; displaying N images in response to the second input; receiving a third input by a user; and selecting M images in the N images and establishing an association relationship between the M images and the first single image in response to the third input. The M images include the first image. The M images in the N images are selected to establish an association relationship between the M images and the first single image, so that the first image associated with the first single image is generated, thereby providing convenient association operation methods for the user.

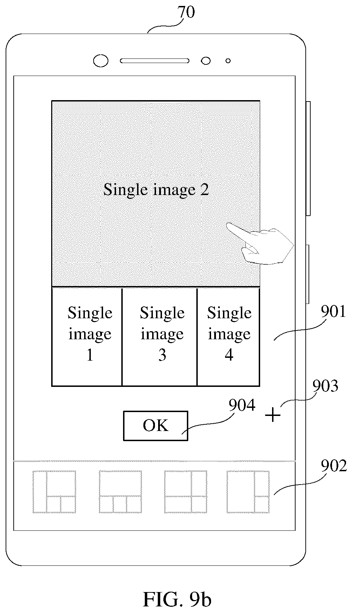

For example, in the interface shown in FIG. 9a, the second input may be a user clicking on the single image 2 (the first single image) to select the single image. As shown in FIG. 9b, a shade is added to the selected single image 2, indicating that the selected single image 2 has been selected, and then the user clicks on the icon 903 to display the album shown in FIG. 8 again (displaying the N images). The user can select one or more album pictures in the album (select the M images by the third input) to determine the currently selected image associated with the single image 2. The M images include the first image described above.

In a case that a value of M is greater than or equal to two, the selecting M images in the N images and establishing an association relationship between the M images and the first single image in response to the third input includes: selecting the M images in the N images, combining the M images into a second collage, and establishing an association relationship between the second collage and the first single image in response to the third input. Therefore, when two or more images are selected to establish an association relationship between the two or more images and the first single image, the selected two or more images can be displayed by using a collage, providing various ways to display images.

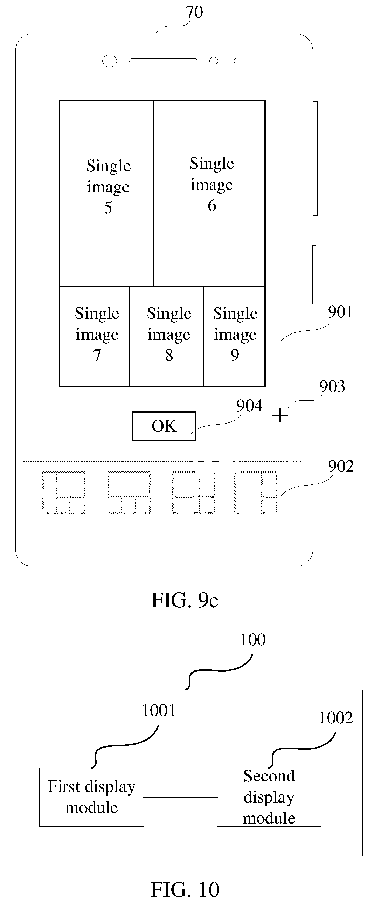

For example, in the interface shown in FIG. 9b, after one or more pictures in the album are selected, a user can click on the "collage cover" to confirm that the M images are selected to establish an association relationship between the M images and the first single image. Then, the interface in the FIG. 9c, which is similar to that of FIG. 9a, is displayed again to display the M images selected by the user. If there is one picture, the effect of segmenting the album picture is displayed (the segmentation effect can include no segmentation, that is, a single image is used as the associated image of the single image 2). The user can further select and set the template for segmentation. After the user clicks on the "OK" icon 904, the selected album picture is associated with the single image 2. If the user selects two or more pictures in the album, that is, a quantity of the selected M images is greater than or equal to two, the effect of combining the two or more album pictures is displayed. During initial display, the selected two or more album pictures can be combined by using a default collage template, and the user can further select a collage template. Specifically, K collage templates can be displayed. After a fourth input by the user to a target collage template in the K collage templates is received, the selected image is combined according to the target collage template to obtain the second collage, and then the association relationship between the second collage and the first single image is established. For example, in the interface in FIG. 9c, after the user clicks on the "OK" icon 904, the M images are combined into the second collage, and the association relationship between the second collage and the single image 2 (the first single image) is established.

After the association relationship between the first single image in the first collage and the first image is created, the user can further create an association relationship between other single images in the first collage other than the first single image and other images. After the user confirms, all the images and the associated relationships thereof can be saved.

For example, in the case that the images and the associated relationships thereof are saved by using a mobile phone, the mobile phone can save these relationships locally. An optional storage relationship is: P= {p₁, p₂, ...}; P₁= {p₁₁, p₁₂, ...}; P₂= {p₂₁, ...}; ...; P₂₁= {p₂₁₁, p₂₁₂, ...}. P is a set of all single images in the first collage, including a plurality of single images p₁, p₂, and the like. P₁ is a set of single images in the images associated with the single image p₁ in the first collage, including a plurality of single images p₁₁, and the like. P₂ is a set of single images in the images associated with the single images p₂ in the first collage, including a plurality of single images p₂₁, and the like. P₂₁ is a set of single images in the images associated with the single images p₂₁, including a plurality of single images p₂₁₁, _{P212}, and the like. When it is necessary to view the above saved relationships, the user can access the album function of the mobile phone, and use the image display method provided in the embodiments of this application to view the first collage and the single image associated with the first collage under a functional module provided by the album function.

The above are examples in which the association relationship between the first collage and the associated image is created locally. Similarly, the method of creating the association relationship on platforms such as application software and web pages can also be deduced in the same manner. After being created, the created association relationship and all the selected single image sets can be saved in a server corresponding to the application software or web pages for viewing by the user who creates the association relationship and the selected single images sets or by other users who are granted with browsing permissions. Details are not described herein again.

In the embodiments of this application, after the first collage is displayed, if the first input to the first single image in the first collage is received, the first image pre-associated with the first single image is displayed. By using this interactive display method, the images associated with the single images that compose the first collage, in addition to the image already displayed in the first collage, can be displayed, so as to implement a new interactive method for image display. This resolves a problem that the image display method in related technologies is simple, which can display more hidden images by using various interactive methods, thereby providing an entrance to view images other than the currently displayed images.

It should be noted that an execution subject of the image display method according to an embodiment of this application may be an image display apparatus, or a control module for performing and loading the image display method in the image display apparatus. In the embodiments of this application, the image display apparatus according to an embodiment of this application is described by using an example in which the image display apparatus performs and loads the image display method.

An embodiment of this application further provides an image display apparatus that can be used to perform the image display method provided in the embodiments of this application. For parts not fully described in the description of the image display apparatus provided in the embodiments of this application, reference can be made to the image display method provided in the embodiments of this application.

As shown in FIG. 10, the image display apparatus 100 provided in the embodiments of this application may include a first display module 1001 and a second display module 1002.

The first display module 1001 may be configured to display a first collage and receive a first input to a first single image. The second display module 1002 may be configured to display a first image associated with the first single image in response to the first input. The first single image is one of images that compose the first collage, and the first image is a second collage or a second single image.

The apparatus 100 may further include a first receiving module, configured to, after the first collage is displayed and before the first input to the first single image is received, receive a second input to the first single image; a third display module, configured to display N images in response to the second input; a second receiving module, configured to receive a third input by a user; and a first execution module, configured to select M images in the N images and establish an association relationship between the M images and the first single image in response to the third input.

Optionally, a value of M is greater or equal to two. The execution module includes, an execution unit, configured to select the M images in the N images, combine the M images into the second collage, and establish an association relationship between the second collage and the first single image in response to the third input. The M images include the first image.

Optionally, the execution unit includes: a selecting subunit, configured to select the M images in the N images and display K collage templates in response to the third input; a receiving subunit, configured to receive a fourth input to a target collage template; a combining subunit, configured to combine the M images based on the target collage template to obtain the second collage in response to the fourth input; and an establishing subunit, configured to establish the association relationship between the second collage and the first single image.

Optionally, the apparatus 100 may further include: a fourth display module, configured to, after the first image associated with the first single image is displayed, in a case that a content of the first image is the same as that of the first single image, cancel the display of the first collage and display the first image in a full screen; or a fifth display module, configured to, after the first image associated with the first single image is displayed, in a case that the content of the first image is different from that of the first single image, display the first collage and the first image in a split screen.

In the image display apparatus in the embodiments of this application, after the first collage is displayed, if the first input to the first single image in the first collage is received, the first image pre-associated with the first single image is displayed. By using this interactive method for display, the images associated with the single images that compose the first collage, in addition to the image already displayed in the first collage, can be displayed, so as to implement a new interactive method for image display. This resolves a problem that the interactive method for image display in related technologies is simple, which can display more hidden images by using various interactive methods, thereby providing an entrance to view images other than the currently displayed images.

The image display apparatus in the embodiments of this application may be an apparatus, or a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (network attached storage, NAS), a personal computer (personal computer, PC), a television (television, TV), an automated teller machine, or a self-service machine. This is not specifically limited in the embodiments of the present application.

The image display apparatus in the embodiments of this application may be an apparatus with an operating system. The operating system may be an Android (Android) operating system, may be an iOS operating system, or may be another possible operating system, which is not specifically limited in the embodiments of this application.

The image display apparatus provided in the embodiments of this application can implement the processes implemented the image display apparatus in the method embodiments in FIG. 1 to FIG. 9c, with the same technical effect achieved. To avoid repetition, details are not described herein again.

Optionally, an embodiment of this application further provides an electronic device, including a processor, a memory, and a program or an instruction stored in the memory and executable on the processor. When the program or the instruction is executed by the processor, the processes of the foregoing image display method embodiments are implemented, with the same technical effects achieved. To avoid repetition, details are not described herein again.

It should be noted that the electronic device in the embodiments of this application includes the foregoing mobile electronic device and the foregoing non-mobile electronic device.

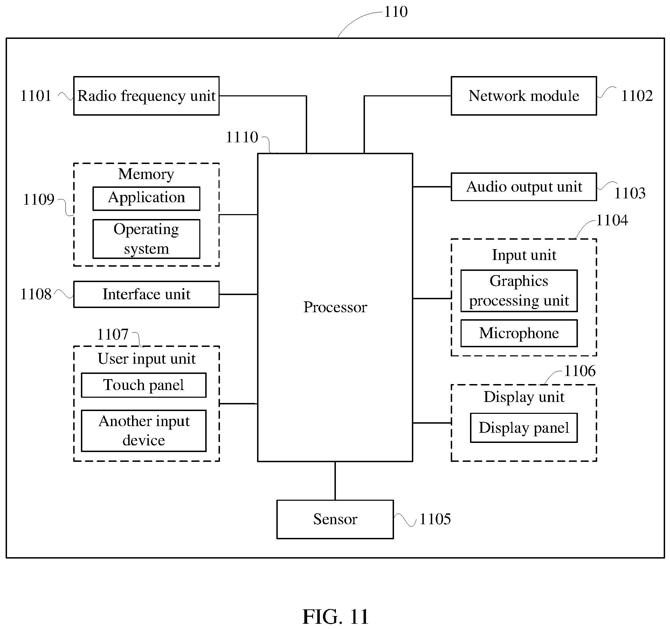

FIG. 11 is a schematic diagram depicting a hardware structure of an electronic device according to an embodiment of this application.

The electronic device 110 includes, but is not limited to: a radio frequency unit 1101, a network module 1102, an audio output unit 1103, an input unit 1104, a sensor 1105, a display unit 1106, a user input unit 1107, an interface unit 1108, a memory 1109, a processor 1110, and the like.

A person skilled in the art can understand that the electronic device 110 may further include a power supply (such as a battery) that supplies power to each component. The power supply may be logically connected to the processor 1110 by using a power supply management system, to implement functions such as charging and discharging management, and power consumption management by using the power supply management system. The input unit 1104 may include a graphics processing unit and a microphone. The display unit 1106 may include a display panel. The user input unit 1107 may include a touch panel and another input device. The memory 1109 may store an application program, an operating system, and the like. The structure of the electronic device shown in FIG. 11 constitutes no limitation on the electronic device. The electronic device may include components more or fewer than those shown in the figure, or a combination of some components, or different component disposed differently. Details are not described herein.

The user input unit 1107 is configured to receive any input by the user, and the display unit 1106 is configured to display an image.

An embodiment of this application further provides a readable storage medium. The readable storage medium stores a program or an instruction. When the program or the instruction is executed by a processor, the processes in the foregoing image display method embodiments are implemented, and a same technical effect can be achieved. To avoid repetition, details are not described herein again.

The processor is a processor in the electronic device in the foregoing embodiment. The readable storage medium includes a computer-readable storage medium. The computer-readable storage medium may include a non-volatile memory, for example, a computer read-only memory (Read-Only Memory, ROM), a random access memory (Random Access Memory, RAM), a magnetic disk, or an optical disc.

An embodiment of this application further provides a chip. The chip includes a processor and a communications interface, and the communications interface is coupled to the processor. The processor is configured to run a program or an instruction, to implement various processes of the foregoing image display method embodiments, with the same technical effects achieved. To avoid repetition, details are not described herein again.

It should be understood that the chip mentioned in the embodiments of this application may also be referred to as a system-level chip, a system chip, a system on chip, a system chip on chip, and the like.

It should be noted that in this specification, the terms "include", "comprise", or any of their variant is intended to cover a non-exclusive inclusion, such that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the methods and apparatuses in the embodiments of the present application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

The foregoing describes the aspects of this disclosure with reference to flowcharts and/or block diagrams of the method, the apparatus (system), and the computer program product according to the embodiments of this disclosure. It should be understood that each block in the flowchart and/or block diagram and a combination of blocks in the flowchart and/or block diagram may be implemented by a computer program instruction. These computer program instructions may be provided for a general-purpose computer, a dedicated computer, or a processor of another programmable data processing apparatus to generate a machine, so that when these instructions are executed by the computer or the processor of the another programmable data processing apparatus, specific functions/actions in one or more blocks in the flowcharts and/or in the block diagrams are implemented. The processor may be but is not limited to a general purpose processor, a dedicated processor, a special application processor, or a field programmable logic circuit. It may be further understood that each block in the block diagram and/or flowchart and a combination of blocks in the block diagram and/or flowchart may be implemented by dedicated hardware that performs a specified function or action, or may be implemented by a combination of dedicated hardware and a computer instruction.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The software product may be stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in each embodiment of this application.

The embodiments of this application are described with reference to the accompanying drawings. However, this application is not limited to the foregoing specific implementations. The foregoing specific implementations are merely examples, but are not limiting. Under the enlightenment of this application, a person of ordinary skill in the art may make many forms without departing from the objective and the scope of the claims of this application, and these forms all fall within the protection scope of this application.

## Claims

1. An image display method, comprising:
displaying a first collage and receiving a first input to a first single image; and
displaying a first image associated with the first single image in response to the first input, wherein
the first single image is one of images that compose the first collage, and the first image is a second collage or a second single image.

2. The image display method according to claim 1, wherein after the displaying a first collage, and before the receiving a first input to a first single image, the method further comprises:
receiving a second input to the first single image;
displaying N images in response to the second input;
receiving a third input by a user; and
selecting M images in the N images and establishing an association relationship between the M images and the first single image in response to the third input, wherein
the M images comprises the first image.

3. The image display method according to claim 2, wherein a value of M is greater than or equal to two, and the selecting M images in the N images and establishing an association relationship between the M images and the first single image in response to the third input comprises:
selecting the M images in the N images, combining the M images into the second collage, and establishing an association relationship between the second collage and the first single image in response to the third input.

4. The image display method according to claim 3, wherein the selecting the M images in the N images, combining the M images into the collage, and establishing an association relationship between the second collage and the first single image in response to the third input comprises:
selecting the M images in the N images and displaying K collage templates in response to the third input;
receiving a fourth input to a target collage template, and combining the M images based on the target collage template to obtain the second collage in response to the fourth input; and
establishing the association relationship between the second collage and the first single image.

5. The image display method according to claim 1, wherein after the displaying a first image associated with the first single image, the method comprises:
in a case that a content of the first image is the same as that of the first single image, canceling the display of the first collage and displaying the first image in a full screen; or
in a case that the content of the first image is different from that of the first single image, displaying the first collage and the first image in a split screen.

6. An image display apparatus, wherein the apparatus comprises:
a first display module, configured to display a first collage and receive a first input to a first single image; and
a second display module, configured to display a first image associated with the first single image in response to the first input, wherein
the first single image is one of images that compose the first collage, and the first image is a second collage or a second single image.

7. The image display apparatus according to claim 6, wherein the apparatus further comprises:
a first receiving module, configured to, after the first collage is displayed and before the first input to the first single image is received, receive a second input to the first single image;
a third display module, configured to display N images in response to the second input;
a second receiving module, configured to receive a third input by a user; and
a first execution module, configured to select M images in the N images and establish an association relationship between the M images and the first single image in response to the third input, wherein the M images comprises the first image.

8. The image display apparatus according to claim 7, wherein a value of M is greater than or equal to two, and the first execution module comprises:
an execution unit, configured to select the M images in the N images, combine the M images into the second collage, and establish an association relationship between the second collage and the first single image in response to the third input.

9. The image display apparatus according to claim 8, wherein the execution unit comprises:
a selecting subunit, configured to select the M images in the N images and display K collage templates in response to the third input;
a receiving subunit, configured to receive a fourth input to a target collage template;
a combining subunit, configured to combine the M images based on the target collage template to obtain the second collage in response to the fourth input; and
an establishing subunit, configured to establish the association relationship between the second collage and the first single image.

10. The image display apparatus according to claim 6, wherein the apparatus further comprises:
a fourth display module, configured to, after the first image associated with the first single image is displayed, in a case that a content of the first image is the same as that of the first single image, cancel the display of the first collage and display the first image in a full screen; or
a fifth display module, configured to, after the first image associated with the first single image is displayed, in a case that the content of the first image is different from that of the first single image, display the first collage and the first image in a split screen.

11. An electronic device, comprising a processor, a memory, and a program or an instruction stored in the memory and executable on the processor, wherein when the program or the instruction is executed by the processor, steps of the image display method according to any one of claims 1 to 5 are implemented.

12. A readable storage medium, wherein the readable storage medium stores a program or an instruction, and when the program or the instruction is executed by a processor, steps of the image display method according to any one of claims 1 to 5 are implemented.

13. A chip, wherein the chip comprises a processor and a communications interface, the communications interface is coupled to the processor, and the processor is configured to run a program or an instruction, to implement the image display method according to any one of claims 1 to 5.

14. A computer program product, wherein the program product is executed by at least one processor, to implement steps of the image display method according to any one of claims 1 to 5.

15. An image display apparatus, wherein the image display apparatus is configured to perform the image display method according to any one of claims 1 to 5.
